# EUROPEAN PATENT APPLICATION

(11) **EP 4 625 772 A1**
(43) Date of publication of application: **01.10.2025**
(21) Application number: 25164352.4
(22) Date of filing: 18.03.2025
(51) Int. Cl.: H02K 3/34, H02K 9/19

(54) **ROTARY ELECTRIC MACHINE**

(30) Priority: 25.03.2024 JP 2024047827
(71) Applicant: Aisin Corporation, Kariya-shi, Aichi-ken 448-8650 (JP)
(72) Inventor: NOZAKI, Hiroyuki, Kariya, Aichi 448-8650 (JP); TAKEMI, Tomohiko, Kariya, Aichi 448-8650 (JP); FURUTA, Yoshitaka, Kariya, Aichi 448-8650 (JP); KOGA, Kiyotaka, Kariya, Aichi 448-8650 (JP)
(74) Representative: TBK

(57) **Abstract**

A rotary electric machine (1) includes: an iron core (211) including a plurality of teeth portions (214); a foamed insulator (24) formed of a foamed foam material and disposed in a plurality of slots (216) formed between the plurality of teeth portions in the iron core; a coil wire (22) that is wound around the iron core in a manner of being surrounded by the foamed insulator in the plurality of slots and that forms a coil end portion (223) on an axially outer side with respect to an axial end surface of the iron core; a first cover member (50) that covers the coil end portion from an axially outer side, a radially inner side, and a radially outer side; a second cover member (60) that covers the axial end surface of the iron core and that has through holes (62) through which the coil wire passes in an axial direction at circumferential positions corresponding to the plurality of slots; and a refrigerant space (80) between the first cover member and the second cover member. The first cover member and the second cover member are coupled to each other. The foamed insulator terminates on the axially outer side relative to the axial end surface of the iron core in a manner of being joined to an inner peripheral wall of the through hole.

## Description

### TECHNICAL FIELD

This disclosure relates to a rotary electric machine.

### BACKGROUND DISCUSSION

There is known a technique for engaging a coil end cover that covers a coil end portion with an end surface cover that covers an axial end surface of a stator core to form a refrigerant space between the coil end cover and the end surface cover.

Examples of the related art include JP 2005-348594A.

However, the technique in the related art as described above has a structure that actively allows a refrigerant in the refrigerant space of the coil end portion to enter a slot through a through hole in the end surface cover, which cannot be applied to a structure that minimizes an inflow of the refrigerant into the slot. Further, in the technique in the related art as described above, it is difficult to fix the end surface cover to the stator core, and it is difficult to ensure a required fixed strength of the end surface cover to the stator core.

Therefore, an object according to an aspect of this disclosure is to ensure a required fixed strength of an end surface cover to a stator core while minimizing an inflow of a refrigerant in a refrigerant space into a slot in a configuration in which the refrigerant space is formed by a coil end cover that covers a coil end portion.

### SUMMARY

According to an aspect of this disclosure, provided is a rotary electric machine including:
an iron core including a plurality of teeth portions;
a foamed insulator formed of a foamed foam material and disposed in a plurality of slots formed between the plurality of teeth portions in the iron core;
a coil wire that is wound around the iron core in a manner of being surrounded by the foamed insulator in the plurality of slots and that forms a coil end portion on an axially outer side with respect to an axial end surface of the iron core;
a first cover member that covers the coil end portion from the axially outer side, a radially inner side, and a radially outer side;
a second cover member that covers the axial end surface of the iron core and that has through holes through which the coil wire passes in an axial direction at circumferential positions corresponding to the plurality of slots; and
a refrigerant space between the first cover member and the second cover member, in which
the first cover member and the second cover member are coupled to each other, and
the foamed insulator terminates on the axially outer side relative to the axial end surface of the iron core in a manner of being joined to an inner peripheral wall of the through hole.

According to the above aspect of this disclosure, a required fixed strength of an end surface cover to a stator core can be ensured while minimizing an inflow of a refrigerant in the refrigerant space into the slot in a configuration in which the refrigerant space is formed by a coil end cover that covers the coil end portion.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a cross-sectional view schematically illustrating a cross-sectional structure of a motor according to an embodiment;
Fig. 2 is a cross-sectional view of a part of a stator core;
Fig. 3 is a cross-sectional view of a stator taken along line 3-3 in Fig. 1;
Fig. 4 is a perspective view of the stator taken out from a motor case;
Fig. 5A is a cross-sectional view of the stator taken along a plane passing through a rotary axis and is a cross-sectional view at a circumferential position where there is no slot;
Fig. 5B is a cross-sectional view of the stator taken along a plane perpendicular to the rotary axis and is a cross-sectional view taken along a plane passing through a core end surface cover;
Fig. 6 is a perspective view of a coil end cover in a single item state viewed from an axially outer side;
Fig. 7 is a perspective view of the coil end cover in a single item state viewed from an axially inner side;
Fig. 8 is a perspective view of the core end surface cover in a single item state as viewed from the axially outer side;
Fig. 9 is a perspective view of the core end surface cover in a single item state as viewed from the axially inner side;
Fig. 10 is an enlarged perspective view of a first snap fit portion in a coupled structure of the coil end cover and the core end surface cover;
Fig. 11 is an enlarged perspective view of a second snap fit portion in the coupled structure of the coil end cover and the core end surface cover;
Fig. 12 is a cross-sectional view of the stator taken along the plane passing through the rotary axis and is a cross-sectional view at a circumferential position passing through the slot;
Fig. 13 is an enlarged view of a portion B in Fig. 12; and
Fig. 14 is a cross-sectional view taken along line 14-14 in Fig. 12.

### DETAILED DESCRIPTION

Hereinafter, an embodiment will be described in detail with reference to the accompanying drawings. The dimensional ratios in the drawings are merely examples and are not limited. Further, shapes and the like in the drawings may be partially exaggerated for the convenience of description. Further, in the drawings, for the sake of clarity, a plurality of parts having the same attribute may be only partially denoted by reference numerals.

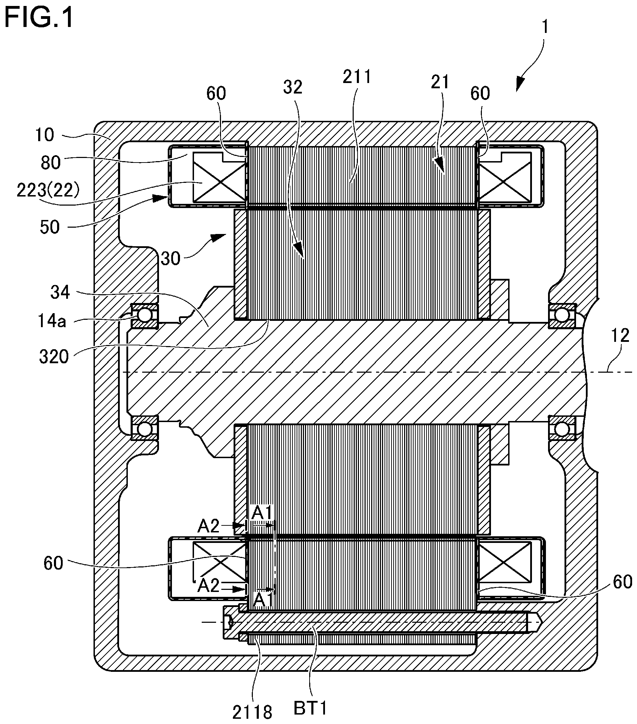

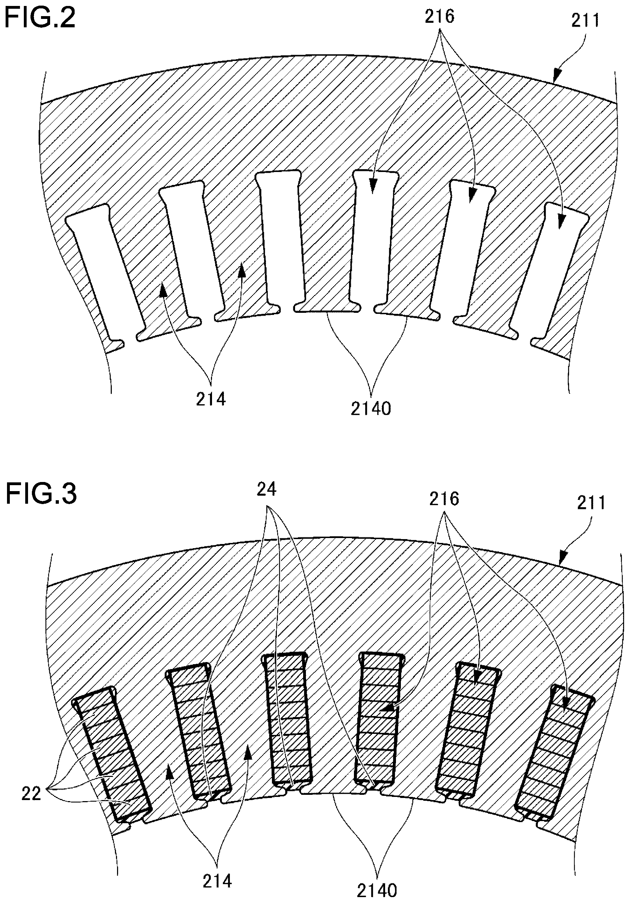

Fig. 1 is a cross-sectional view schematically illustrating a cross-sectional structure of a motor 1 according to an embodiment. Fig. 2 is a cross-sectional view of a part of a stator core 211. Fig. 3 is a cross-sectional view of a stator 21 taken along line 3-3 in Fig. 1.

Fig. 1 illustrates a rotary axis 12 of the motor 1. In the following description, an axial direction refers to a direction in which the rotary axis (a rotation center) 12 of the motor 1 extends, an axially outer side refers to a side away from a center of the stator core 211 in the axial direction, and an axially inner side refers to a side toward the center of the stator core 211 in the axial direction. A radial direction refers to a radial direction around the rotary axis 12, a radially outer side refers to a side away from the rotary axis 12, and a radially inner side refers to a side toward the rotary axis 12. A circumferential direction corresponds to a direction of rotation around the rotary axis 12.

The motor 1 may be, for example, a motor for driving vehicles used in a hybrid vehicle or an electric vehicle. However, the motor 1 may be used for any other application.

The motor 1 is accommodated in a motor case 10 and is supported by the motor case 10. The motor case 10 may also accommodate drive elements (for example, a speed reduction mechanism) other than the motor 1. The motor case 10 may be formed by a combination of a plurality of case members.

In the present embodiment, the motor 1 is an inner rotor type, and the stator 21 is provided to surround a radially outer side of a rotor 30.

The stator 21 is fixed to the motor case 10. The stator 21 includes the stator core 211, a coil wire 22, a foamed insulator 24 (see Fig. 3), a coil end cover 50, and a core end surface cover 60.

The stator core 211 is formed of, for example, an annular magnetic laminated steel plate, and may also be formed of a green compact obtained by compressing and solidifying magnetic powder. In the stator core 211, an inner peripheral portion and an outer peripheral portion (for example, a back yoke portion) may be formed as separate pieces. The stator core 211 may be formed by combining divided cores divided in the circumferential direction.

The stator core 211 includes a fixing portion 2118 projecting to the radially outer side. The fixing portion 2118 has a bolt fastening hole through which a bolt BT1 passes. The stator core 211 is fixed to the motor case 10 by the bolt BT1 fastened to the fixing portion 2118.

As illustrated in Fig. 2, the stator core 211 has teeth portions 214 on the radially inner side, which are disposed at a constant pitch along the circumferential direction. A slot 216 is formed between the teeth portions 214 adjacent to each other in the circumferential direction. The slot 216 is open on both sides in the axial direction and is open radially inward. In the present embodiment, the teeth portion 214 has an increased dimension in the circumferential direction at an end portion 2140 on the radially inner side. That is, in the teeth portion 214, the end portion 2140 on the radially inner side expands in the circumferential direction.

The coil wire 22 may include a conductor wire covered with an insulating coating. In Fig. 3 and the like, the coil wire 22 is illustrated without the insulating coating for convenience of drawing. The cross section of the coil wire 22 may be any shape, for example, rectangular (flat wire) or circular (round wire). The coil wire 22 is wound around the stator core 211 to form a stator coil. The coil wire 22 may be wound in any manner such as concentrated winding or distributed winding.

The coil wire 22 is wound around the stator core 211 while being inserted into the slot 216. Then, a coil end portion 223 is formed on the axially outer side with respect to an axial end surface of the stator core 211. The coil end portion 223 is formed by portions (portions outside the slots 216) of the coil wire 22 extending among the slots 216 in the circumferential direction. The coil end portion 223 is formed on both sides of the stator core 211 in the axial direction. The coil end portion 223 has an annular shape as viewed in the axial direction.

In the present embodiment, the coil end portion 223 has a form in which the axially outer side is tilted toward the radially outer side. In this case, it is easy to ensure gaps in the radial direction between the coil wires 22 forming the coil end portion 223. Such a form is suitable when the coil wire 22 forming the coil end portion 223 is in a form of a so-called segment coil and is coupled to each other by being joined by welding. This is because the larger the gap between the coil wires 22 in the radial direction is, the easier it is to ensure a space for a welding jig.

The foamed insulator 24 is formed by foaming foam insulating paper (slot paper) 240 (to be described later) disposed in the slot 216. The foamed insulator 24 surrounds the coil wire 22 in the slot 216. The foamed insulator 24 may be provided to close an opening of the slot 216 in the radially inner side. For example, the foamed insulator 24 may be disposed to extend in the entire axial direction of the slot 216 at a position on the axially inner side relative to a through hole 62 of the core end surface cover 60 to be described later. In this case, the opening of the slot 216 on the radially inner side can be closed by the core end surface cover 60 and the foamed insulator 24.

The rotor 30 is disposed on the radially inner side of the stator 21.

The rotor 30 includes a rotor core 32 and a rotor shaft 34.

The rotor core 32 is fixed to a radially outer surface of the rotor shaft 34 and rotates integrally with the rotor shaft 34. The rotor core 32 has a shaft hole 320, and the rotor shaft 34 is fitted into the shaft hole 320. The rotor core 32 may be fixed to the rotor shaft 34 by shrink fitting, press fitting, or the like. For example, the rotor core 32 may be coupled to the rotor shaft 34 by key coupling or spline coupling. The rotor shaft 34 is rotatably supported by the motor case 10 via bearings (a bearing 14a, and the like). The rotor shaft 34 defines the rotary axis 12 of the motor 1.

The rotor core 32 is formed of, for example, an annular magnetic laminated steel plate. A permanent magnet may be provided inside or on a radially outer surface of the rotor core 32.

The coil end cover 50 surrounds the coil end portion 223. That is, the coil end cover 50 covers the coil end portion 223 from the axially outer side, the radially inner side, and the radially outer side. The coil end cover 50 may be formed of a resin material when importance is attached to low heat dissipation, and may be formed of a metal material otherwise.

The core end surface cover 60 covers an axial end surface 2110 of the stator core 211. The core end surface cover 60 has the through holes 62 at circumferential positions corresponding to the slots 216. The through hole 62 is formed to allow the coil wire 22 extending to the axially outer side from the slot 216 to pass through. The core end surface cover 60 may be formed of a resin material when importance is attached to low heat dissipation, and may be formed of a metal material otherwise.

The coil end cover 50 and the core end surface cover 60 are coupled to each other. The coil end cover 50 and the core end surface cover 60 form an annular oil passage 80 (see Fig. 1) as viewed in the axial direction between them and the axial end surface 2110 of the stator core 211. Further details of the coil end cover 50 and the core end surface cover 60 will be described later together with details of a coupled structure of the coil end cover 50 and the core end surface cover 60.

Fig. 1 illustrates the motor 1 having a specific structure, and the structure of the motor 1 is not limited to such a specific structure. For example, the rotor shaft 34 is solid in Fig. 1, but may be hollow.

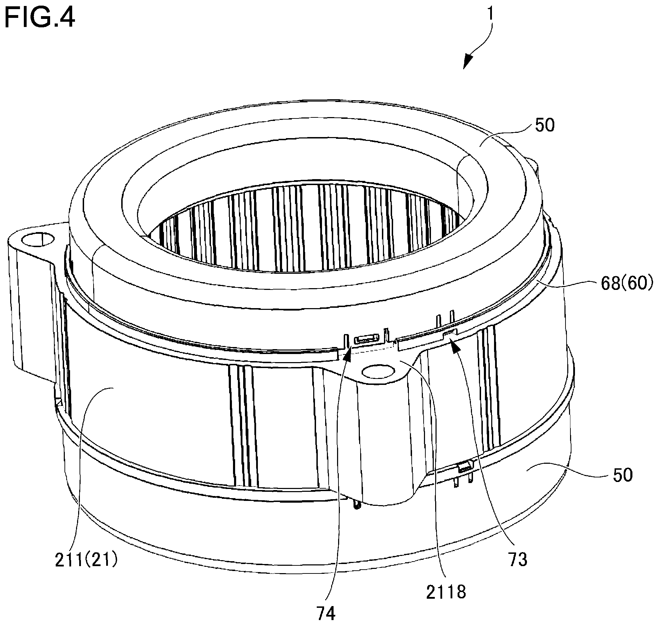

Next, a characteristic configuration of the present embodiment will be described with reference to Fig. 4 and subsequent drawings while referring to Figs. 1 and 3. Hereinafter, the configuration on one side in the axial direction (the coil end cover 50, the core end surface cover 60, and the like) will be mainly described, and the configuration on the other side in the axial direction may be the same.

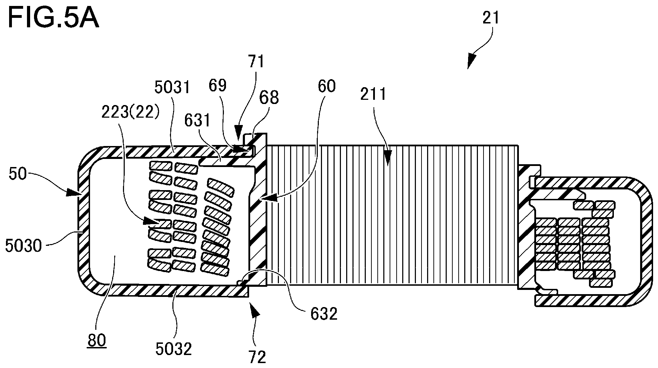

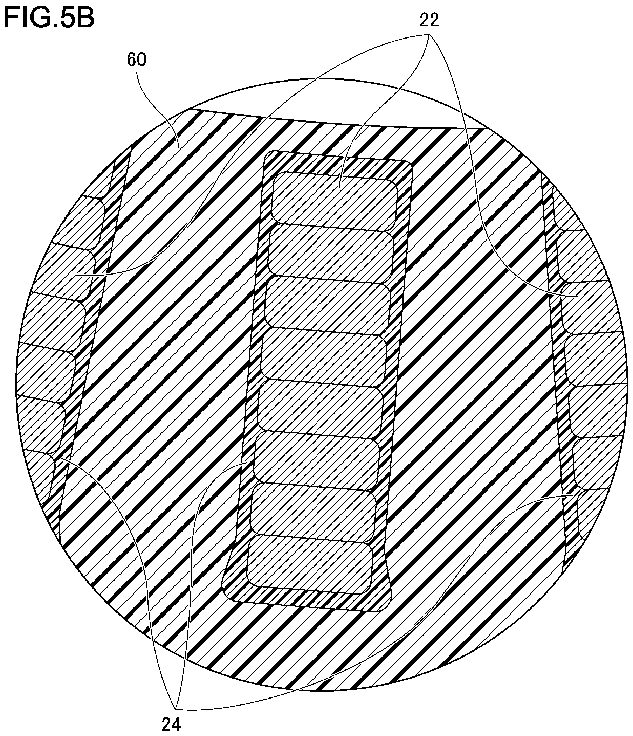

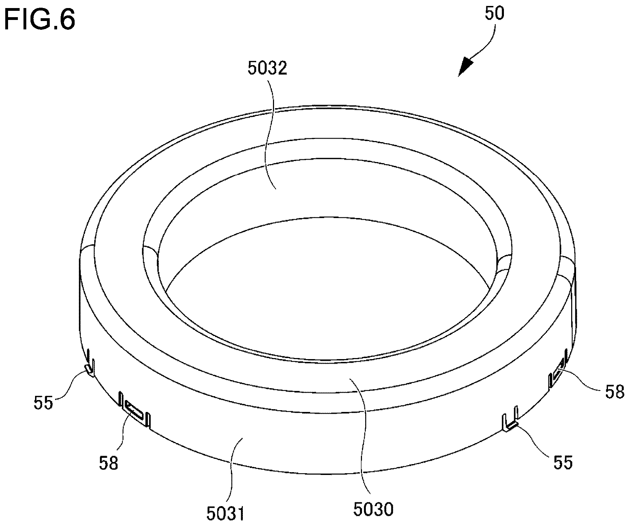

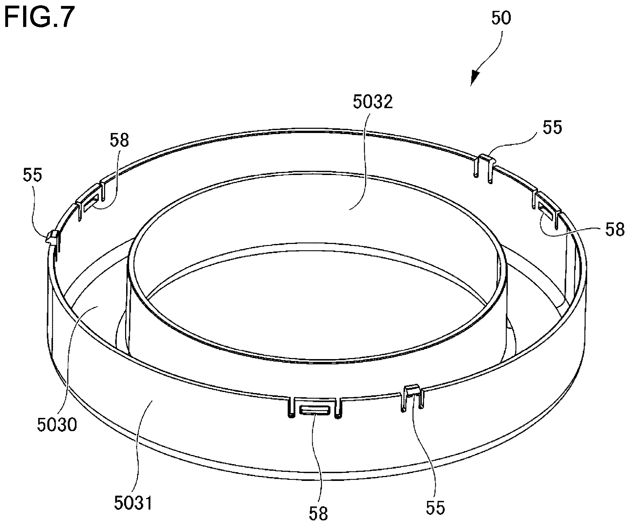

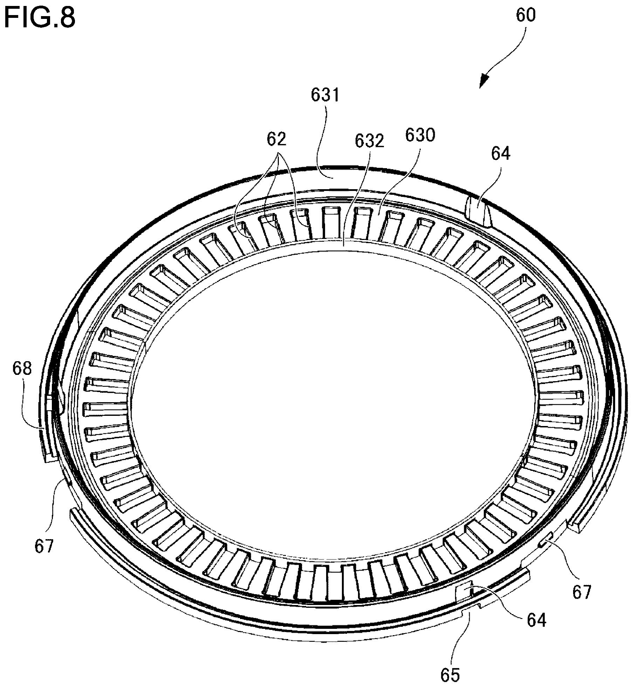

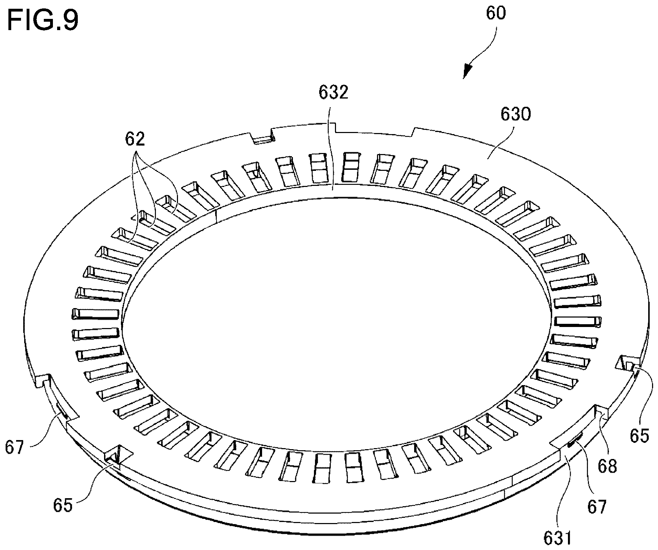

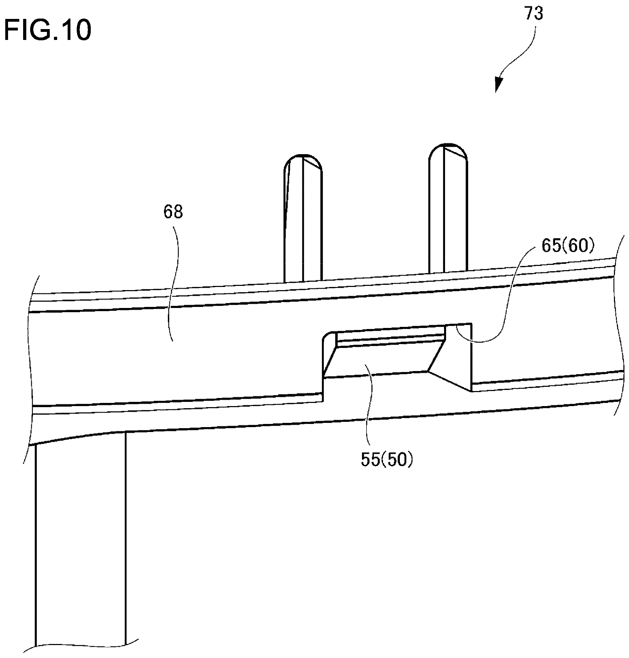

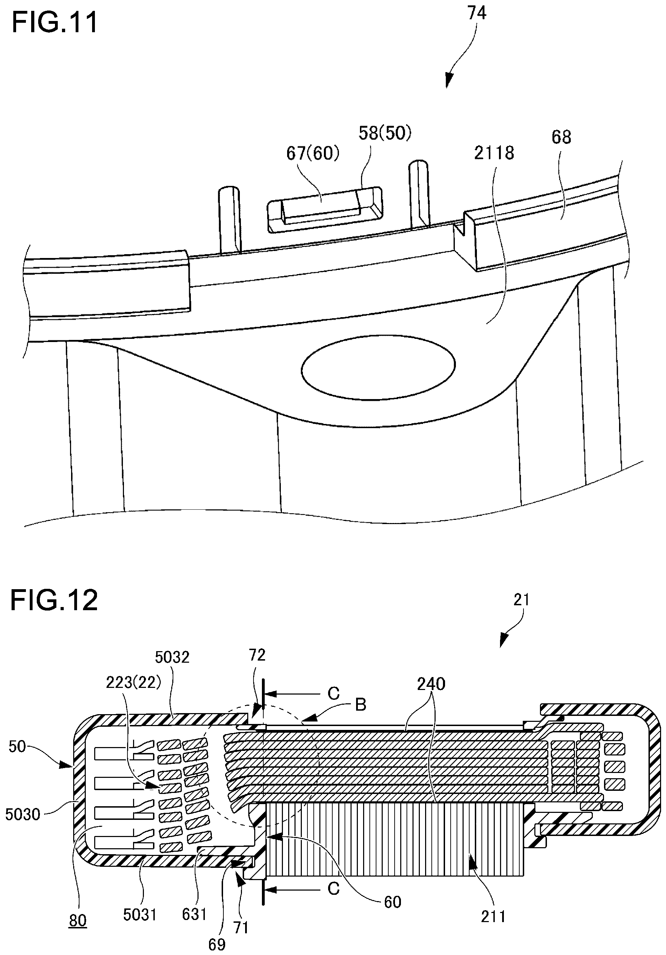

Fig. 4 is a perspective view of the stator 21 taken out from the motor case 10. Fig. 5A is a cross-sectional view of the stator 21 taken along a plane passing through the rotary axis 12 and is a cross-sectional view at a circumferential position where there is no slot 216. Fig. 5A illustrates only one side symmetrical with respect to the rotary axis 12. Fig. 5B is a cross-sectional view of the stator 21 taken along a plane perpendicular to the rotary axis 12 and is a cross-sectional view taken along a plane passing through the core end surface cover 60. Fig. 5B illustrates only a partial range in the circumferential direction. Figs. 6 and 7 are perspective views of the coil end cover 50 in a single item state, Fig. 6 is a perspective view from the axially outer side, and Fig. 7 is a perspective view from the axially inner side. Figs. 8 and 9 are perspective views of the core end surface cover 60 in a single item state, Fig. 8 is a perspective view from the axially outer side, and Fig. 9 is a perspective view from the axially inner side. Fig. 10 is an enlarged perspective view of a first snap fit portion 73 in the coupled structure of the coil end cover 50 and the core end surface cover 60. Fig. 11 is an enlarged perspective view of a second snap fit portion 74 in the coupled structure of the coil end cover 50 and the core end surface cover 60.

As illustrated in Figs. 6 and 7, the coil end cover 50 has an annular shape as viewed in the axial direction. In the coil end cover 50, a top surface portion 5030 on the axially outer side, a circumferential surface portion 5031 on the radially outer side, and a circumferential surface portion 5032 on the radially inner side form a C shape in a cross-sectional view (Fig. 1) taken along the plane passing through the rotary axis 12. The top surface portion 5030 and the circumferential surface portions 5031 and 5032 of the coil end cover 50 may form substantially the same C shape in the cross-sectional view (Fig. 1) taken along the plane passing through the rotary axis 12 at each circumferential position in a circumferential direction section. Meanwhile, the coil end cover 50 may have an oil inlet or an oil outlet (not illustrated) in the circumferential surface portion 5031 or the like, at a partial circumferential position or range, in addition to an engagement claw 55 and an engagement hole 58 to be described later. The coil end cover 50 forms the oil passage 80 by the C-shaped space portion formed by the top surface portion 5030 and the circumferential surface portions 5031 and 5032.

The circumferential surface portion 5031 on the radially outer side faces the radially outer side of the coil end portion 223 over the entire circumference in the radial direction from the radially outer side. The circumferential surface portion 5031 on the radially outer side has an end portion in the axially inner side engaged with the core end surface cover 60. The circumferential surface portion 5031 on the radially outer side is engaged with the core end surface cover 60 on the radially outer side relative to the slot 216 (on the radially outer side relative to the coil end portion 223).

Specifically, the circumferential surface portion 5031 on the radially outer side is engaged with a standing circumferential surface portion 631 on the radially outer side of the core end surface cover 60 by interference fit in the radial direction. In the illustrated example, the standing circumferential surface portion 631 presses the circumferential surface portion 5031 in the radial direction from the radially inner side toward the radially outer side. The circumferential surface portion 5031 and the standing circumferential surface portion 631 may be engaged with each other in a manner involving fitting of a convex portion in the radial direction and a concave portion in the radial direction.

The circumferential surface portion 5032 on the radially inner side faces the radially inner side of the coil end portion 223 over the entire circumference in the radial direction from the radially inner side. The circumferential surface portion 5032 on the radially inner side has an end portion in the axially inner side engaged with the core end surface cover 60. The circumferential surface portion 5032 on the radially inner side is engaged with the core end surface cover 60 on the radially inner side relative to the coil wire 22 in the slot 216.

Specifically, the circumferential surface portion 5032 on the radially inner side is engaged with a standing circumferential surface portion 632 on the radially inner side of the core end surface cover 60 by interference fit in the radial direction. In the illustrated example, the standing circumferential surface portion 632 presses the circumferential surface portion 5032 in the radial direction from the radially outer side toward the radially inner side. The circumferential surface portion 5032 and the standing circumferential surface portion 632 may be engaged with each other in a manner involving fitting of a convex portion in the radial direction and a concave portion in the radial direction.

In this way, in the present embodiment, the coil end cover 50 and the core end surface cover 60 are coupled to each other via a coupled portion by interference fit (hereinafter, also referred to as a "first interference fit portion 71") on the radially outer side of the annular oil passage 80 and a coupled portion by interference fit (hereinafter, also referred to as a "second interference fit portion 72") on the radially inner side of the oil passage 80. Since the first interference fit portion 71 and the second interference fit portion 72 are formed over the entire circumferential direction, high sealability can be ensured over the entire annular oil passage 80.

In the present embodiment, the first interference fit portion 71 and the second interference fit portion 72 are disposed within a range overlapping the stator core 211 as viewed in the axial direction. Accordingly, the coil end cover 50 and the core end surface cover 60 can be disposed and coupled without increasing the size of the entire motor 1 in the radial direction.

In the present embodiment, the first interference fit portion 71 overlaps the coil end portion 223 (the coil wire 22) as viewed in the axial direction. Specifically, in the present embodiment, as described above, the coil end portion 223 has the form in which the axially outer side is tilted toward the radially outer side, and the first interference fit portion 71 can be disposed using a dead space formed by such a coil end portion 223. In a modification, instead of or in addition to the first interference fit portion 71, the second interference fit portion 72 may overlap the coil end portion 223 (the coil wire 22) as viewed in the axial direction. In this case, the second interference fit portion 72 may be located on the axially outer side relative to the illustrated position in the axial direction, and may face an end portion of the coil end portion 223 on the axially outer side in the radial direction from the radially inner side.

The core end surface cover 60 has an annular shape and covers the axial end surface of the stator core 211. The core end surface cover 60 has a base surface 630 that is in surface contact with the axial end surface of the stator core 211.

In the core end surface cover 60, the standing circumferential surface portions 631 and 632 and a flange portion 68 stand on the axially outer side from the base surface 630. Specifically, the core end surface cover 60 includes the standing circumferential surface portion 632 at an edge portion on the radially inner side, and includes the flange portion 68 at an edge portion on the radially outer side (an outer peripheral edge portion) in addition to the standing circumferential surface portion 631 on the radially outer side. The flange portion 68 is located on the radially outer side relative to the standing circumferential surface portion 631. The flange portion 68 forms a concave portion 69 recessed to the axially inner side in cooperation with the standing circumferential surface portion 631. The end portion on the axially inner side of the circumferential surface portion 5031 on the radially outer side of the coil end cover 50 described above is inserted into the concave portion 69. In this case, the circumferential surface portion 5031 on the radially outer side of the coil end cover 50 is covered by the flange portion 68 in the radial direction from the radially outer side at the end portion on the axially inner side. In this case, even when the circumferential surface portion 5031 is displaced on the radially outer side due to the internal pressure of the oil passage 80 and the like, the circumferential surface portion 5031 is locked by the flange portion 68 from the radially outer side. Therefore, even when the interference in the first interference fit portion 71 is reduced due to the internal pressure and the like, it is possible to maintain a coupling state between the coil end cover 50 and the core end surface cover 60 on the radially outer side.

A width in the radial direction of the concave portion 69 formed by the flange portion 68 and the standing circumferential surface portion 631 may be substantially the same as a thickness of the circumferential surface portion 5031 on the radially outer side of the coil end cover 50.

Here, the flange portion 68 may be provided over the entire circumference, but is preferably provided in a circumferential range avoiding the fixing portion 2118 of the stator core 211. In this case, the fixing portion 2118 can be packed on the radially inner side by a part corresponding to the flange portion 68, and the size of the stator 21 in the radial direction can be reduced. Even in this case, since the flange portion 68 can be disposed over a relatively wide circumferential range, the function of the flange portion 68 described above (the function of preventing the circumferential surface portion 5031 on the radially outer side of the coil end cover 50 from being displaced toward the radially outer side) can be ensured over the relatively wide circumferential range.

As described above, the core end surface cover 60 has the through holes 62 in the axial direction at the circumferential position corresponding to the slot 216 in the base surface 630. The through hole 62 is disposed between the standing circumferential surface portion 632 and the standing circumferential surface portion 631 in the radial direction. The through hole 62 is provided to allow the coil wire 22 to extend from the slot 216 to the radially outer side of the stator core 211. Therefore, a gap is formed between an inner peripheral wall of the through hole 62 and the coil wire 22. However, in the present embodiment, the foamed insulator 24 is disposed in the through hole 62 in the core end surface cover 60. Therefore, the foamed insulator 24 can fill the gap between the inner peripheral wall of the through hole 62 and the coil wire 22. Accordingly, the oil in the oil passage 80 is less likely to enter the slot 216 via the through hole 62, and an amount of oil in the oil passage 80 leaking to the slot 216 can be eliminated or reduced. Even when the oil leaks to the slot 216, the oil is substantially prevented from leaking further from the opening of the slot 216 on the radially inner side into a radial space between the stator 21 and the rotor 30 by the foamed insulator 24 blocking the opening of the slot 216 on the radially inner side. Accordingly, it is possible to prevent the occurrence of drag loss caused by oil leaking to the radial space between the stator 21 and the rotor 30.

In the present embodiment, the coil end cover 50 and the core end surface cover 60 are further coupled via the first snap fit portion 73 in the radial direction and the second snap fit portion 74 in the radial direction. In the present embodiment, the first snap fit portion 73 and the second snap fit portion 74 are provided on the radially outer side of the annular oil passage 80, but instead of or in addition to this case, the first snap fit portion 73 and/or the second snap fit portion 74 may be provided on the radially inner side of the annular oil passage 80.

The first snap fit portion 73 and the second snap fit portion 74 are provided at different positions in the circumferential direction, and a radial position relationship between the engagement claw and the engagement hole related to each snap fit is the same.

Specifically, the first snap fit portion 73 is a snap fit portion between the engagement claw 55 on the coil end cover 50 side that faces the radially outer side and an engagement hole 65 on the core end surface cover 60 side. In this case, at the time of assembly, the engagement claw 55 is once elastically deformed to the radially inner side, then enters the engagement hole 65, and is elastically restored, thereby implementing a snap fit. The engagement hole 65 is formed in a peripheral wall portion of the flange portion 68 of the core end surface cover 60.

As illustrated in Fig. 10, the coil end cover 50 may have a portion including the engagement claw 55, that is surrounded by notches. That is, notches may be formed on both sides in the circumferential direction of the portion including the engagement claw 55. In this case, elastic deformation of the portion including the engagement claw 55 on the radially inner side becomes easy. That is, ease of assembly is improved. The core end surface cover 60 may be further formed with thinned portions 64 (see Fig. 8) that allow the engagement claw 55 to be deformed toward the radially inner side during the assembly.

Preferably, the first snap fit portions 73 are provided at a plurality of locations along the circumferential direction. In the present embodiment, for example, as can be seen from Figs. 7 and 9, the first snap fit portions 73 are provided at a total of three locations at a pitch of 120 degrees.

The second snap fit portion 74 is a snap fit portion between an engagement claw 67 on the core end surface cover 60 side that faces the radially outer side and the engagement hole 58 on the coil end cover 50 side. In this case, at the time of assembly, the engagement claw 67 is once elastically deformed to the radially inner side, then enters the engagement hole 58, and is elastically restored, thereby implementing a snap fit.

As illustrated in Fig. 11, the coil end cover 50 may have a portion including the engagement hole 58, that is surrounded by notches. That is, notches may be formed on both sides in the circumferential direction of the portion including the engagement hole 58. In this case, elastic deformation of the portion including the engagement hole 58 on the radially outer side becomes easy. That is, at the time of assembly, the portion including the engagement hole 58 is once elastically deformed to the radially outer side, then allows the engagement claw 67 to enter, and is elastically restored, thereby implementing a snap fit.

Preferably, the second snap fit portions 74 are provided at a plurality of locations along the circumferential direction. In the present embodiment, for example, as can be seen from Figs. 7 and 9, the second snap fit portions 74 are provided at a total of three locations at a pitch of 120 degrees. At this time, the second snap fit portion 74 is provided at a different circumferential position from the first snap fit portion 73.

As illustrated in Fig. 11, the second snap fit portion 74 may be provided to match a phase of the fixing portion 2118. Since the flange portion 68 is not provided in the circumferential range of the fixing portion 2118, the elastic deformation of the coil end cover 50 (the elastic deformation of the portion including the engagement hole 58) to the radially outer side is easy.

In this way, according to the present embodiment, the first snap fit portion 73 and the second snap fit portion 74 are provided in addition to the two interference fit portions (that is, the first interference fit portion 71 and the second interference fit portion 72) on the radially inner and outer sides described above. Accordingly, it is possible to effectively reduce the possibility that the coupled state between the coil end cover 50 and the core end surface cover 60 is released (that is, a possibility that the coil end cover 50 is disengaged from the core end surface cover 60). In particular, as described above, the first snap fit portion 73 and the second snap fit portion 74 have the same radial position relationship between the engagement claw and the engagement hole related to each snap fit. That is, in the present embodiment, the engagement claws 55 and 67 are located on the radially inner side of the engagement holes 65 and 58, respectively. Accordingly, the coupled state between the coil end cover 50 and the core end surface cover 60 is easily maintained. That is, for example, the deformation in a direction in which the first snap fit portion 73 is disengaged results in the deformation in a direction in which the engaged state of the second snap fit portion 74 is promoted (strengthened), and vice versa. Accordingly, the possibility that the coupled state between the coil end cover 50 and the core end surface cover 60 is released (that is, disengaged) can be significantly reduced. To maximize this effect, the first snap fit portion 73 and the second snap fit portion 74 may be disposed at relatively close circumferential positions. That is, the first snap fit portion 73 and the second snap fit portion 74 may be arranged adjacent to each other in the circumferential direction.

In the present embodiment, the first snap fit portion 73 and/or the second snap fit portion 74 may be disposed within a range overlapping the stator core 211 as viewed in the axial direction. Accordingly, the coil end cover 50 and the core end surface cover 60 can be firmly coupled without increasing the size of the entire motor 1 in the radial direction.

In the present embodiment, the first snap fit portion 73 and/or the second snap fit portion 74 may be disposed within a range overlapping the coil end portion 223 (the coil wire 22) as viewed in the axial direction. Specifically, in the present embodiment, as described above, the coil end portion 223 has the form in which the axially outer side is tilted toward the radially outer side, and the first snap fit portion 73 and/or the second snap fit portion 74 can be disposed using a dead space formed by such a coil end portion 223.

Next, with reference to Figs. 12 to 14, a method for manufacturing the stator 21 according to the present embodiment will be outlined, and in relation thereto, a relationship between the core end surface cover 60 and the foamed insulator 24 will be described in detail.

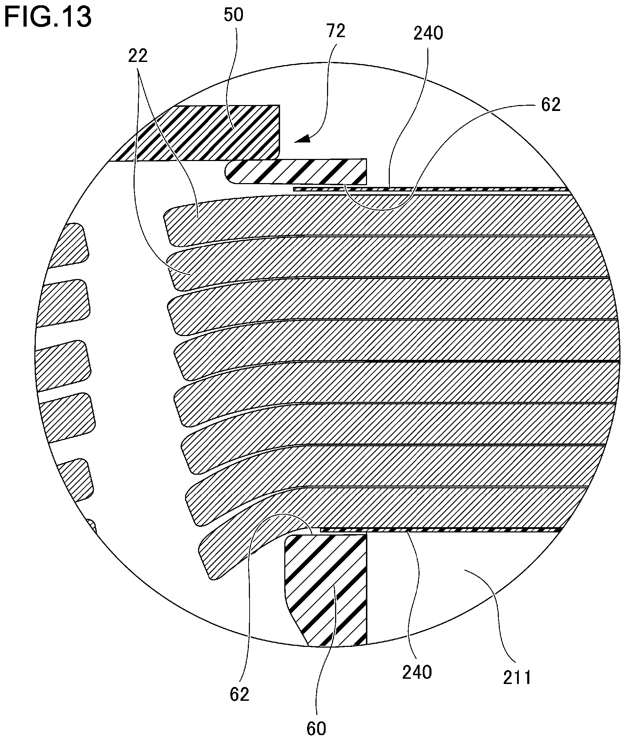

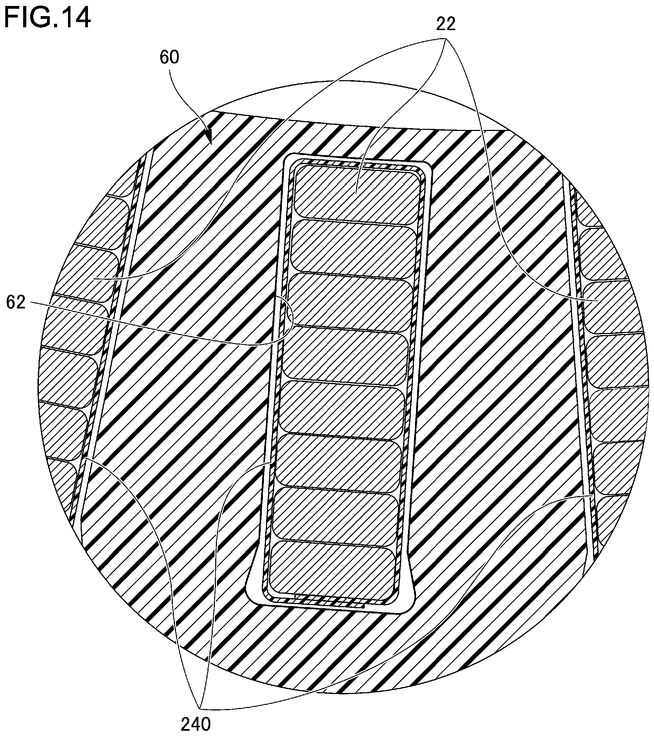

Fig. 12 is a cross-sectional view of the stator 21 in an assembled state, and is a cross-sectional view of the stator 21 taken along the plane passing through the rotary axis 12 (a cross-sectional view of only one side with respect to the rotary axis 12). Fig. 12 is a cross-sectional view at a circumferential position passing through the slot 216. Fig. 13 is an enlarged view of a portion B in Fig. 12, and Fig. 14 is a cross-sectional view taken along line 14-14 in Fig. 12. In Figs. 12 to 14, the foam insulating paper (the slot paper) 240 for forming the foamed insulator 24 is illustrated in an unfoamed state.

In the present embodiment, the core end surface cover 60 is fixed to the stator core 211 by being joined to the foamed insulator 24 fixed in the slot 216 of the stator core 211.

As described above, the foamed insulator 24 is formed of the foam insulating paper (the slot paper) 240. The foam insulating paper 240 contains, for example, a thermosetting component in addition to a foaming component that foams by heating. In this case, the foamed insulator 24 can be joined to a peripheral portion (the core end surface cover 60 or the like) after foaming.

In a manufacturing step, as illustrated in Fig. 13, the foam insulating paper 240 is inserted into the slot 216 of the stator core 211 with an axial end portion located within the through hole 62 of the core end surface cover 60. At this time, the foam insulating paper 240 preferably remains in the through hole 62 and does not extend to the axially outer side relative to the core end surface cover 60. That is, the foam insulating paper 240 preferably terminates at the axially outer side relative to the slot 216 of the stator core 211 and within the through hole 62 of the core end surface cover 60 (at a position overlapping the through hole 62 as viewed in the radial direction). Accordingly, the foamed insulator 24 can be formed to be joined over a wide range of the inner peripheral wall of the through hole 62 after foaming, and the fixing strength of the core end surface cover 60 due to the foamed insulator 24 can be increased. Further, since the foamed insulator 24 does not extend to the axially outer side relative to the core end surface cover 60, a surface area of the coil wire 22 in contact with the oil in the oil passage 80 (a surface area that enables efficient heat dissipation) can be maximized.

In a comparative example in which the foam insulating paper 240 is inserted into the slot 216 while terminating in the slot 216 of the stator core 211, the foam material easily enters a space between the core end surface cover 60 and the axial end surface of the stator core 211 when the foam insulating paper 240 foams. In contrast, according to the present embodiment, since the foam insulating paper 240 is inserted into the slot 216 of the stator core 211 while terminating on the axially outer side relative to the slot 216, the possibility of such a problem can be reduced.

Here, in the present embodiment, the through hole 62 of the core end surface cover 60 may have the same shape as the slot 216, but preferably does not have an opening on the radially inner side unlike the slot 216. That is, the through hole 62 is preferably closed on the radially inner side. In this case, it is possible to prevent the possibility that the foam material leaks to the radially inner side from the through hole 62 when the foam insulating paper 240 foams. In other words, the gap around the coil wire 22 in the through hole 62 can be reliably filled with foaming of the foam insulating paper 240, and it is possible to eliminate the need to separately provide a seal member (for example, when there is an opening in the radial direction, a seal member for sealing the opening) on the radially inner side of the core end surface cover 60.

In the manufacturing step, the foam insulating paper 240 is inserted into the slot 216 in a tubular form with overlapping end portions. At this time, the foamed insulator 24 is inserted such that the overlapping end portions are preferably located on the radially outer side of the slot 216 as illustrated in Fig. 14. Accordingly, it is possible to efficiently increase a joined range of the foamed insulator 24 joined to the core end surface cover 60 while reducing the possibility that the foamed insulator 24 protrudes from the opening of the slot 216 on the radially inner side to the radially inner side relative to a tip of the teeth portion 214.

The principles, preferred embodiment and mode of operation of the present invention have been described in the foregoing specification. However, the invention which is intended to be protected is not to be construed as limited to the particular embodiments disclosed. Further, the embodiments described herein are to be regarded as illustrative rather than restrictive. Variations and changes may be made by others, and equivalents employed, without departing from the spirit of the present invention. Accordingly, it is expressly intended that all such variations, changes and equivalents which fall within the spirit and scope of the present invention as defined in the claims, be embraced thereby.

Regarding the disclosure described above, the following is further disclosed.

### Appendix 1

A rotary electric machine including:
an iron core including a plurality of teeth portions;
a foamed insulator formed of a foamed foam material and disposed in a plurality of slots formed between the plurality of teeth portions in the iron core;
a coil wire that is wound around the iron core in a manner of being surrounded by the foamed insulator in the plurality of slots and that forms a coil end portion on an axially outer side with respect to an axial end surface of the iron core;
a first cover member that covers the coil end portion from an axially outer side, a radially inner side, and a radially outer side;
a second cover member that covers the axial end surface of the iron core and that has through holes through which the coil wire passes in an axial direction at circumferential positions corresponding to the plurality of slots; and
a refrigerant space between the first cover member and the second cover member, in which
the first cover member and the second cover member are coupled to each other, and
the foamed insulator terminates on the axially outer side relative to the axial end surface of the iron core in a manner of being joined to an inner peripheral wall of the through hole.

### Appendix 2

The rotary electric machine according to Appendix 1, in which
the foamed insulator terminates at the same axial position as an axial outer end position of the through hole or at an axial position on an axially inner side relative to the axial outer end position of the through hole.

### Appendix 3

The rotary electric machine according to Appendix 1 or 2, in which the foamed insulator closes a radial opening of the slot.

### Appendix 4

The rotary electric machine according to any one of Appendixes 1 to 3, in which the foamed insulator is in a form of slot paper before foaming and is formed by overlapping end portions of the slot paper on a radially outer side in the slot.

### Appendix 5

The rotary electric machine according to any one of Appendixes 1 to 4, in which the foamed insulator fills a gap between the inner peripheral wall of the through hole and the coil wire.

### Appendix 6

The rotary electric machine according to any one of Appendixes 1 to 5, in which the through hole has a form in which a radially inner side is closed as viewed in the axial direction.

### Appendix 7

The rotary electric machine according to any one of Appendixes 1 to 6, in which the first cover member and the second cover member are coupled to each other via a first coupled portion on a radially outer side of the refrigerant space and a second coupled portion on a radially inner side of the refrigerant space in a cross-sectional view taken along a plane passing through a central axis of the iron core, and the first coupled portion or the second coupled portion is disposed in a range overlapping the iron core as viewed in the axial direction.

## Claims

1. A rotary electric machine (1) comprising:
an iron core (211) including a plurality of teeth portions (214);
a foamed insulator (24) formed of a foamed foam material and disposed in a plurality of slots (216) formed between the plurality of teeth portions in the iron core;
a coil wire (22) that is wound around the iron core in a manner of being surrounded by the foamed insulator in the plurality of slots and that forms a coil end portion (223) on an axially outer side with respect to an axial end surface of the iron core;
a first cover member (50) that covers the coil end portion from an axially outer side, a radially inner side, and a radially outer side;
a second cover member (60) that covers the axial end surface of the iron core and that has through holes (62) through which the coil wire passes in an axial direction at circumferential positions corresponding to the plurality of slots; and
a refrigerant space (80) between the first cover member and the second cover member, wherein
the first cover member and the second cover member are coupled to each other, and
the foamed insulator terminates on the axially outer side relative to the axial end surface of the iron core in a manner of being joined to an inner peripheral wall of the through hole.

2. The rotary electric machine according to claim 1, wherein
the foamed insulator terminates at the same axial position as an axial outer end position of the through hole or at an axial position on an axially inner side relative to the axial outer end position of the through hole.

3. The rotary electric machine according to claim 1, wherein
the foamed insulator closes a radial opening of the slot.

4. The rotary electric machine according to any one of claims 1 to 3, wherein
the foamed insulator is in a form of slot paper before foaming and is formed by overlapping end portions of the slot paper on a radially outer side in the slot.
